# EUROPEAN PATENT SPECIFICATION

(11) **EP 2 594 430 B1**
(45) Date of publication and mention of the grant of the patent: **25.05.2016**
(21) Application number: 12193202.4
(22) Date of filing: 19.11.2012
(51) Int. Cl.: B60P 3/40

(54) **Blade transport wagon**
Transportfahrzeug für ein Rotorblatt
Véhicule de transport d'une pale

(30) Priority: 18.11.2011 DK 201170631
(43) Date of publication of application: 22.05.2013
(73) Proprietor: Blue Water Shipping A/S, 6700 Esbjerg (DK)
(72) Inventor: Messmann, Søren, 6720 Fanø (DK)
(74) Representative: Gregersen, Niels Henrik

(56) References cited:
- WO-A1-2007/147413
- DE-A1- 3 143 723
- DE-U1-202010 015 762
- US-A1- 2004 091 346

## Description

### Field of the Invention

The present invention concerns a blade transport dolly for towing a blade for a wind energy plant, wherein the blade transport dolly at least includes a chassis with a front end and a rear end, wherein at or in the immediate vicinity of the front end of the blade transport dolly there is arranged a coupling device for coupling the blade transport dolly to a towing vehicle, where the blade transport dolly further includes a rear end for coupling to the blade to be towed, and a number of wheel axles with wheels arranged at the front end, at the rear end, or between the ends, respectively, that the blade transport dolly at its rear end includes at least one rearwardly directed coupling means adapted with securing means for lockable coupling to a corresponding coupling part on a lift beam or a blade of the type which the blade transport dolly is adapted to tow.

### Background of the Invention

It is commonly known that i.a. blades, towers and nacelles for modem wind energy plants are to be transported in connection with production, shipping and other handling. This transport is frequently difficult as they are heavy and not the least elongated objects, in particular when speaking of blades that easily are up to about 60 m long and which in the future will have lengths up to 80 m and even more. With regard to blades, the weight of a blade of 50-60 m is about 16-19 metric tons while the diameter at the root end of a blade is between 250 and 350 cm, and even larger. With regard to tower elements, the diameter is greater and the weight even higher, and the heaviest are the assembled nacelles that easily can weigh 150 metric tons or more. For example, the nacelle for a 6 MW wind energy plant weighs 235 metric tons.

Moving and transporting tower elements and nacelles is thus markedly different from moving blades due to the appreciably lower weight of wings but also due to the fact that blades for wind energy plants are much more flexible/elastic and fragile, why the way of supporting and handling blades is somewhat different from the way of handling towers and nacelles.

Blades for wind energy plants are typically made of fibre-reinforced plastic, also called composite. At the root end of the blade where typically a steel flange is integrated, there is commonly fitted a kind of transport rack or frame. This frame usually includes a pair of legs for bearing on the base such that the blade is supported and kept at a distance from the base by this frame. Similarly, there is usually provided a support about 2/3 of the length of the blade from the root end and towards the tip end. This support typically also has a pair of legs. By moving a blade with such frames there is typically used a crane or a large forklift truck for moving the blade, which is necessary typically when moving it between various steps during production, to a storage area, to a harbour for shipping or the like.

Moving a blade as described above is typically effected by arranging lift straps around the blade after which it is lifted off the base and moved. However, this is not a very expedient way of proceeding as it requires a large forklift truck with a very special lifting yoke, and at the same time such a moving requires much space in width as well as length since the blade is moved while disposed more or less transversely to the forklift truck. The crane or the forklift truck are furthermore rather large as lifting and moving of such large object not only require the ability to lift a great weight but also the presence of a heavy counterweight on e.g. a forklift truck. The great counterweight is necessary in order to perform a secure lifting which typically occurs at a relatively large distance from the front wheels on the forklift truck. In order to prevent the forklift truck from tipping over, it is provided with a heavy rear end to ensure a secure moving operation.

In connection with moving across longer distances, sometimes low trucks are used on which the blade is placed by crane or forklift truck. This solution, however, requires lifting on as well as off which all things considered is associated with expenses and much time consumption.

There are solutions too wherein there is arranged a dolly under the tip end of the blade and wherein a steel frame is mounted on the blade root, where cutouts are arranged in the steel frame in the form of holes for the forks of a forklift. The root end of the blade can be lifted off the base by a forklift truck and moved as the blade and thereby the dolly under the blade tip are towed. However, this solution has the drawback that it can be difficult to prevent a twist occurring in the blade during the moving, which is completely undesirable.

However, a partial solution to the challenge of preventing the occurrence of a twist in the blade is indicated as fittings bolted on the blade to be moved are used. This fitting is connected via a king pin to a transverse beam which typically is resting on the base. In this transverse beam there are cutouts for forks of forklift trucks such as to lift and subsequently tow the blade to the desired place. Hereby is achieved a movable link between the blade and the forklift truck, providing a greater manoeuvrability. However, a rather large forklift truck with an unloaden weight of up to 50 metric tons or more is still required, which cannot always be expected to be accessible for economic reasons at the areas where movements commonly occur.

From DE 20 2010 015 762 U1 the preamble of claim 1 is known and it shows a solution for transporting tower segments for wind turbines is known. The solution comprises a kind of dolly that via coupling means can be attached to a tower section at the end flange, preferably at both ends of a tower section, where - due to the stiffness of the tower section - a transport can take place. The dolly comprises a number of axles comprising wheels and has an certain extension away from the coupling means in order to have said axles and wheels arranged.

### Object of the Invention

It is the object of the invention to indicate a solution where large and long blades for wind energy plants can be moved in a simple and uncomplicated way, wherein the moving is effected by using an implement according to the invention and otherwise by applying commonly occurring transport equipment.

### Description of the Invention

The present invention concerns a blade transport dolly for towing a blade for a wind energy plant, wherein the blade transport dolly at least includes a chassis with a front end and a rear end, wherein at or in the immediate vicinity of the front end of the blade transport dolly there is arranged a coupling device for coupling the blade transport dolly to a towing vehicle.

The blade transport dolly further includes a rear end for coupling to the blade to be towed, and a number of wheel axles with wheels arranged at the front end, at the rear end, or between the ends, respectively, that the blade transport dolly at its rear end includes at least one rearwardly directed coupling means adapted with securing means for lockable coupling to a corresponding coupling part on a lift beam or a blade of the type which the blade transport dolly is adapted to tow.

The new features of a blade transport dolly according to the invention are that the blade transport dolly, at the front end of the blade transport dolly chassis, comprises a counterweight, said counterweight comprising a ballast, e.g. a container filled with concrete or other suitable ballast or where said ballast is constituted by steel items, concrete items or other means with sufficient weight.

A blade transport dolly according to the invention is thus adapted with means for being towed by a vehicle. A suitable vehicle which is usually at hand where goods are handled and moved may e.g. be a so-called terminal tractor which is typically used for moving semitrailers. By a blade transport dolly according to the invention and a terminal tractor is achieved a simple solution by which blades for wind energy plants can immediately be moved in a factory area, in a storage area and/or in a harbour area. The terminal tractor does not require any special conditions and is a simple tool which is operated without great cost. By coupling a blade transport dolly to a terminal tractor moving the actual objects can readily be performed. By coupling the front end of a blade transport dolly to a terminal tractor, or for that matter to a lorry, the blade transport dolly itself can be moved to couple with the object at the rear end of the blade transport dolly.

The moving occurs by the rearwardly directed coupling means being brought to engage corresponding coupling means on the object, after which the blade transport dolly so to say forms an intermediate link between the object and the terminal tractor. As the blade transport dolly is equipped with at least two wheels at each their side, it can immediately be moved into position relative to the object or to coupling members adapted for the purpose thereon.

In a particularly preferred variant of a blade transport dolly according to the invention it further includes a steering part, the steering part including the wheel axles with wheels, and where between the chassis and steering part there is arranged at least one passive steering rod.

By mounting the steering part on the chassis of the blade transport dolly at a vertical rotary axis and by connecting a steering rod from the chassis to each wheel on the steering part, there is achieved the effect that the blade transport dolly will turn as well when the towing vehicle is turning. Hereby is ensured that no twist is applied via transport dolly, coupling means or other members to the moved object. This is particularly significant for blades for wind energy plants as they can be deformed and damaged by too large load thereon.

In yet a variant of a blade transport dolly according to the invention one or more active steering rods can be mounted. This may e.g. be a hydraulic cylinder where actuation causes that a more directly controlled steering of the blade transport dolly can be performed.

A blade transport dolly according to the invention may be designed such that it is the rear end of the blade transport dolly which constitutes a steering part. This steering part can be pivotably fixed to the chassis by a substantially vertical axis, and be arranged at each of the transverse ends with a wheel which is pivotable about a substantially vertical axis as well. Hereby is achieved a compact and robust design which is easy to manoeuvre.

In a preferred variant of a blade transport dolly according to the invention the rearwardly directed coupling means can be equipped with means such that the coupling means is/are displaceable in vertical direction between a lower position and an upper position, the difference between the lower and upper positions being between 5 cm and 100 cm, preferably about 50 cm. Hereby it is possible to lift the object off the base prior to moving or transport.

A blade transport dolly according to the invention may advantageously be designed such that the rearwardly directed coupling means includes a lift tower including one or more linear actuators, including one or more one or more hydraulic cylinders. By the term lift tower is meant a lifting system wherein the coupling means can be displaced up and down in a kind of rail as it is known from a so-called truck tower on a forklift truck. Here it is just a rather modest lifting height as the purpose is only to lift the object off the base and to ensure a given ground clearance during the moving of the object. The mentioned lifting and lowering of the rearwardly directed coupling means can readily be performed with other kinds of mechanisms, and the method itself by which the desired movement is achieved is not so essential.

In a practical variant according to the invention, a blade transport dolly can be made with rearwardly directed coupling means which include two parallel lift forks wherein the two lift forks are arranged with mutual spacing and with a length corresponding to a coupling part on an object of the type which the blade transport dolly is suited to tow, and wherein at least one of the lift forks includes securing means for securing the engagement with a corresponding coupling part. The spacing between the lift forks can e.g. be 100 cm, but may be greater or lesser as well. However, it is rather obvious that a standard spacing should correspond to the coupling means arranged in connection with the object. At the same time it is important that the coupling means are equipped with securing means which e.g. can be a bolt which after coupling can be passed through an aperture in one or both lift forks whereby the latter cannot immediately be pulled out for the corresponding coupling means on the object.

The mentioned corresponding coupling means on the object may advantageously be constituted by a steel frame bolted on a blade root and which via a king pin is rotatably connected with a lift beam in which is arranged cutouts or apertures for the lift forks. This lift fork can e.g. be 30 cm thick why the lift forks e.g. can be 40 cm long so that they extend through the lift beam and so that a safety bolt can be fitted in the lift fork at the other side of the lift beam.

A blade transport dolly according to the invention may advantageously be designed such that the rearwardly directed coupling means are laterally displaced relative to a central longitudinal axis extending from the rear end to the front end of the blade transport dolly. Hereby it is possible to compensate for the displaced centre of gravity of an object. For example, a blade for a wind energy plant has a centre of gravity which is offset relative to the longitudinal centre line of the root end. Such an uneven distribution of weight can be compensated for by arranging the entire rearwardly coupling part offset relative to the centre line of the blade transport dolly.

In a variant of a blade transport dolly according to the invention the rearwardly coupling means can be mechanically displaceable in the transverse direction of the blade transport dolly. Hereby is achieved the possibility of adapting the blade transport dolly to different types of blades or other objects whether the centre of gravity is offset or not.

A possible way of handling objects with offset or not offset centres of gravity is to set the position of the rearwardly directed coupling means according to data for the object in question. Another possibility is that a blade transport dolly according to the invention includes at least two weigh cells either arranged between the rearwardly directed coupling means and the blade transport dolly itself or arranged in connection with the wheel axles of the blade transport dolly, for determining the load applied on each of the axles of the blade transport dolly. By using input from such weigh cells, the position of the rearwardly directed coupling means can be adjusted rather precisely with regard to the actual object to be moved. Such an adjustment can be performed manually or automatically with means suited for the purpose.

In an absolutely preferred embodiment of a blade transport dolly according to the invention there is arranged a king pin at the front end on the chassis of the blade transport dolly for coupling to a standardised semitrailer stool on a vehicle. The vehicle can be any kind of vehicle, including the previously mentioned terminal tractor or a lorry with suitable coupling means. By a king pin and a stool are achieved a good and secure solution which is well-known and which is readily applied.

Finally, a blade transport dolly can be provided with one or more support legs as known from semitrailers and from standalone platforms such that it can be parked in periods where it is not in use.

### Description of the Drawing

The invention is described in the following with reference to the drawing, wherein:
- Fig. 1: shows a blade transport dolly as seen from above and obliquely from behind;
- Fig. 2: shows a blade transport dolly as seen from the side and with a lift beam on the rearwardly directed coupling means;
- Fig. 3: shows a blade transport dolly as seen from below and from the side;
- Fig. 4: shows a blade transport dolly as seen from the side and with a blade;
- Fig. 5: shows a tipping dolly under a blade.

In the explanation of the Figures, identical or corresponding elements will be provided with the same designations in different Figures. Therefore, no explanation of all details will be given in connection with each single Figure/embodiment.

### List of reference numbers

- 1: blade transport dolly
- 2: chassis
- 3: front end
- 4: rear end
- 5: counterweight
- 6: support legs
- 7: rearwardly directed coupling means
- 8: lift fork
- 9: securing means on lift forks
- 10: lift tower
- 11: steering part
- 12: rotary axis for steering part
- 13: wheels
- 14: wheel axle
- 15: wheel suspension
- 16: steering rod
- 17: vertical rotary axes for wheel suspensions
- 18: lift beam
- 19: corresponding coupling means in lift beam
- 20: king pin on chassis
- 21: object/blade for wind energy plant
- 22: tipping dolly

### Detailed Description of Embodiments of the Invention

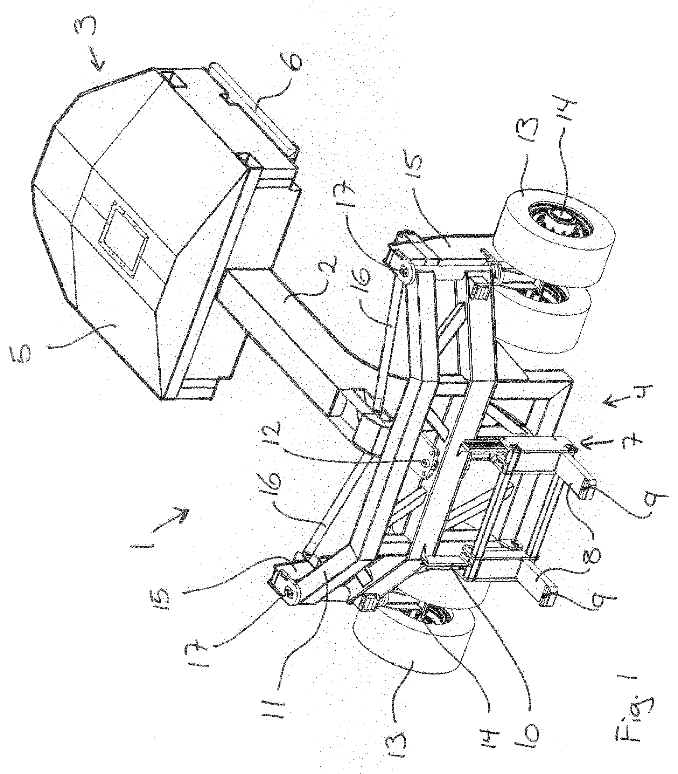

Fig. 1 shows a blade transport dolly 1 as seen from above and obliquely from behind; The blade transport dolly 1 consists of a central and longitudinal chassis 2 with a front end 3 and a rear end 4. At the front end 3 is disposed a counterweight 5, here in the shape of a closed container in which ballast can be filled, e.g. concrete. Under the counterweight along the side is seen a support leg 6 in folded up condition. The support leg 6 can be released from the shown position and pivoted to vertical position and may thus support the blade transport dolly 1 at the front end 3.

At the rear end 4 of the blade transport dolly 1 the rearwardly directed coupling means 7 are seen, here including two lift forks 8 provided with securing means 9 at the ends. The securing means 9 in the shown variant are constituted by vertical through-going holes in the lift forks 8 for receiving a not shown safety bolt, and a thickening at the ends of the lift forks. The lift forks 8 are arranged on a lift tower 10 by which the lift forks can be moved between a lower position and an upper position. The lifting height is about 50 cm in the shown variant. The lift tower 10 and thereby also the lift forks 8 are here seen displaced towards the left side of the blade transport dolly whereby there is compensated for an offset centre of gravity on the object to be moved.

The rear end 4 is here made as a steering part 11 which is connected to the chassis 2 by a vertical axis of rotation 12. At the ends of the steering part in transverse direction appear wheels 13 which via wheel axles 14 are connected to wheel suspensions 15. Between wheel suspension 15 and chassis 2 are seen two steering rods 16, one at each side of the chassis 2. The wheel suspensions 15 are fixed to the steering part 11 at the vertical rotary axes 17, and when the chassis is forced to one of the sides the result is that the steering rods 16 act on the wheel suspensions 15, whereby the rear end 4 of the blade transport dolly 1 is easily and elegantly steered without causing twist in the moved object.

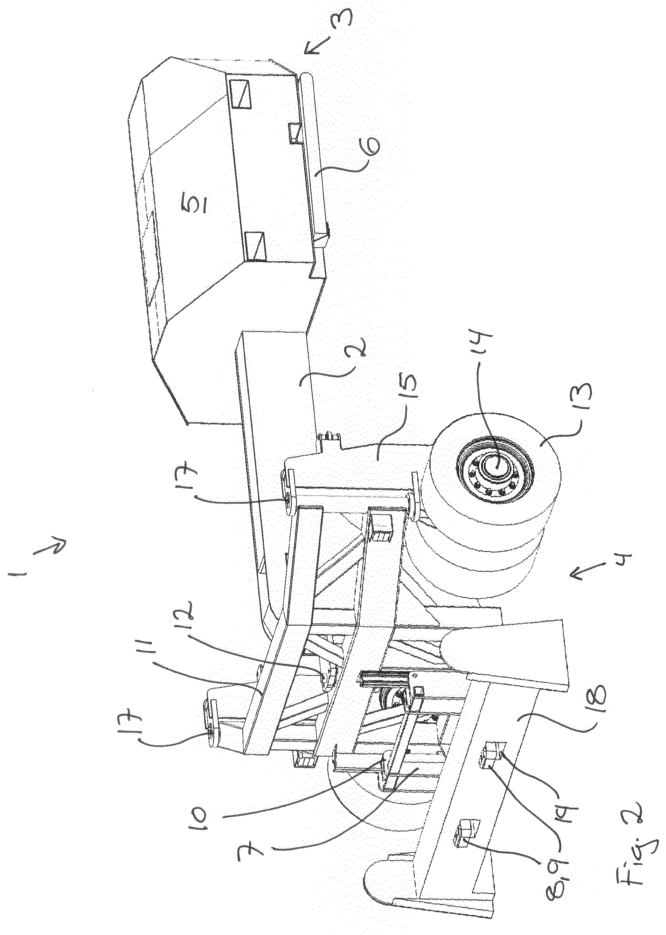

In Fig. 2 appears a blade transport dolly 1 as also shown in Fig. 1, but here seen from the side and with a lift beam 18 on the rearwardly directed lift forks 8. It appears on the Figure that the securing means 9 on the lift forks 8 protrude a bit on the other side of the corresponding coupling means 19 in the lift beam 18 whereby securing is enabled. The lift beam 18 is here shown in a simplified embodiment as it will be provided with fittings for direct or indirect joining with the object to be moved.

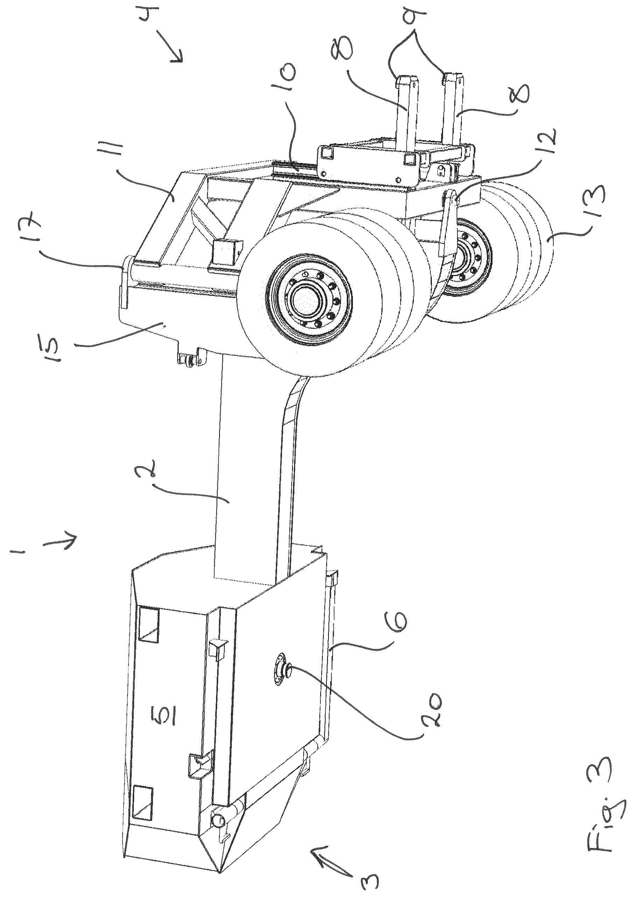

Fig. 3 shows a blade transport dolly 1 as seen from below and from the side where particularly the king pin 20 on the chassis 2 appears. The king pin 20 is here made such that it fits with a standardised semitrailer stool on a vehicle. It is thus possible to use the blade transport dolly 1 together with a commonly occurring and relatively simple and cheap vehicle. At the same time is achieved the advantage that no special vehicle is to be used for this type of movements but they can be performed with current and common vehicles.

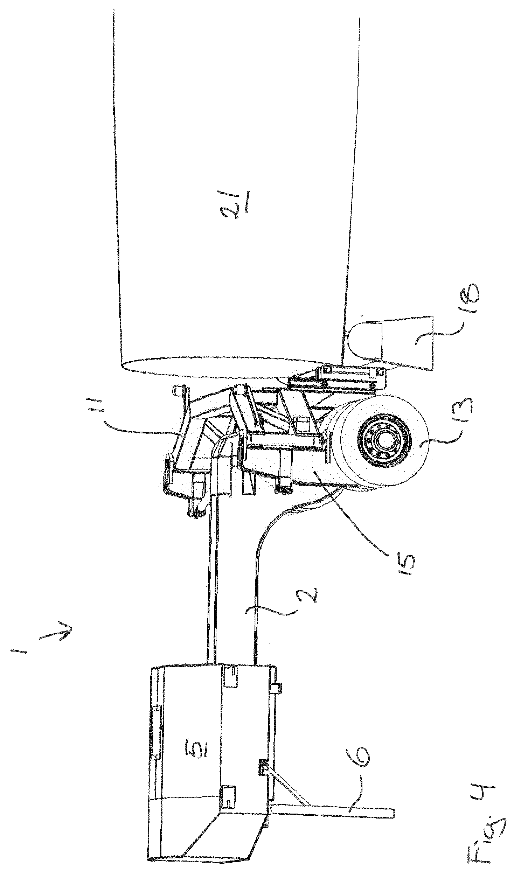

Fig. 4 shows a blade transport dolly 1 as seen from the side and supported with a support leg 6 and with a lift beam 18 with an object/blade for a wind energy plant 21. Only part of the root end of the blade 21 is seen on the Figure. The blade 21 is fixed by not shown fittings to the lift beam which is coupled with the rearwardly directed coupling means 7.

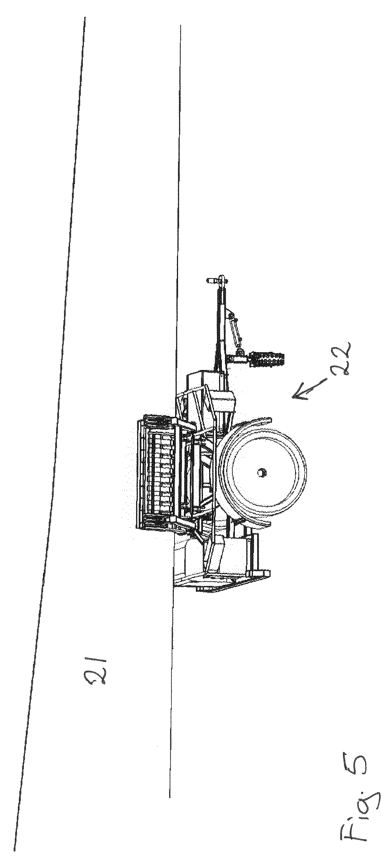

Fig. 5 shows a tipping dolly 22 under a blade/object 21. Only part of the root end of the blade 21 is seen here as well on the Figure. During towing of an object/blade 21 by a blade transport dolly 1, the blade dolly is only towed as a rolling support of the outermost part of the blade/object 21.

## Claims

1. A blade transport dolly (1) for towing a blade (21) for a wind energy plant, wherein the blade transport dolly (1) at least includes a chassis (2) with a front end (3) and a rear end (4), wherein at or in the immediate vicinity of the front end (3) of the blade transport dolly (3) there is arranged a coupling device (20) for coupling the blade transport dolly to a towing vehicle, where the blade transport dolly (1) further includes a rear end (4) for coupling to the blade (21) to be towed, and a number of wheel axles (14) with wheels (13) arranged at the front end (3), at the rear end (4), or between the ends, respectively, that the blade transport dolly (1) at its rear end (4) includes at least one rearwardly directed coupling means (7) adapted with securing means (9) for lockable coupling to a corresponding coupling part (19) on a lift beam (18) or a blade (21) of the type which the blade transport dolly (19) is adapted to tow, **characterised in that** the blade transport dolly (1), at the front end (3) of the blade transport dolly chassis (2), comprises a counterweight (5), said counterweight (5) comprising a container filled with ballast, e.g. concrete or other suitable ballast or where said ballast is constituted by steel items, concrete items or other means with sufficient weight.

2. Blade transport dolly (1) according to claim 1, **characterised in that** the blade transport dolly (1) further includes a steering part (11), the steering part (11) including the wheel axles (14) with wheels (13), and that between the chassis (2) and steering part (11) there is arranged at least one passive steering rod (16).

3. Blade transport dolly (1) according to claim 1, **characterised in that** the blade transport dolly (1) further includes a steering part (11), the steering part (11) including the wheel axles (14) with wheels (13), and that between the chassis (2) and steering part (11) there is arranged at least one active steering rod (16).

4. Blade transport dolly (1) according to any of claims 2 and 3, **characterised in that** the rear end of the blade transport dolly (4) is constituted by a steering part (11).

5. Blade transport dolly (1) according to any of claims 1 to 4, **characterised in that** the rearwardly directed coupling means (7) is displaceable in vertical direction between a lower position and an upper position, the difference between the lower and upper positions being between 5 cm and 100 cm, preferably about 50 cm.

6. Blade transport dolly (1) according to any of claims 1 to 5, **characterised in that** the rearwardly directed coupling means (7) includes a lift tower (10) including one or more linear actuators, including one or more one or more hydraulic cylinders.

7. Blade transport dolly (1) according to any of claims 1 to 6, **characterised in that** the rearwardly directed coupling means (7) includes two parallel lift forks (8) wherein the two lift forks (8) are arranged with mutual spacing and with a length corresponding to a coupling part (19) on an object (18, 21) of the type which the blade transport dolly (1) is suited to tow, and wherein at least one of the lift forks (8) includes securing means (9) for securing the engagement with a corresponding coupling part (19).

8. Blade transport dolly (1) according to any of claims 1 to 7, **characterised in that** the rearwardly directed coupling means (7) are laterally displaced relative to a central longitudinal axis extending from the rear end (4) to the front end (3) of the blade transport dolly.

9. Blade transport dolly (1) according to any of claims 1 to 8, **characterised in that** the rearwardly directed coupling means (7) are mechanically displaceable in transverse direction of the blade transport dolly.

10. Blade transport dolly (1) according to any of claims 1 to 9, **characterised in that** the blade transport dolly (1) includes at least two weigh cells arranged between the rearwardly directed coupling means (7) and the blade transport dolly (1), or arranged in connection with the wheel axles (14) of the blade transport dolly, for determining the load applied on each of the axles (14) of the blade transport dolly.

11. Blade transport dolly (1) according to any of claims 1 to 10, **characterised in that** at the front end (3) on the chassis (2) of the blade transport dolly there is arranged a king pin (20) for coupling to a standardised semitrailer stool on a vehicle.

## Patentansprüche

1. Flügeltransportwagen (1) zum Schleppen eines Flügels (21) für eine Windenergieanlage, wobei der Flügeltransportwagen (1) mindestens ein Fahrgestell (2) mit einem vorderen Ende (3) und einem hinteren Ende (4) umfasst, wobei an dem oder in unmittelbarer Umgebung des vorderen Endes (3) des Flügeltransportwagens (3) eine Kopplungsvorrichtung (20) zum Koppeln des Flügeltransportwagens an ein Schleppfahrzeug angeordnet ist, wobei der Flügeltransportwagen (1) ferner ein hinteres Ende (4) zum Koppeln an den zu schleppenden Flügel (21) umfasst sowie eine Anzahl von Radachsen (14) mit Rädern (13), die am vorderen Ende (3) beziehungsweise am hinteren Ende (4) oder zwischen den Enden angeordnet sind, dass der Flügeltransportwagen (1) an seinem hinteren Ende (4) mindestens ein nach hinten gerichtetes Kopplungsmittel (7) umfasst, das mit Sicherungsmitteln (9) für eine verriegelbare Kopplung an ein entsprechendes Kopplungsteil (19) auf einem Hubbalken (18) oder einem Flügel (21) des Typs, für dessen Schleppen der Flügeltransportwagen (19) geeignet ist, ausgebildet ist, **dadurch gekennzeichnet, dass** der Flügeltransportwagen (1) am vorderen Ende (3) des Fahrgestells (2) des Flügeltransportwagens ein Gegengewicht (5) umfasst, wobei das Gegengewicht (5) einen Behälter umfasst, der mit Ballast gefüllt ist, beispielsweise Beton oder ein anderer geeigneter Ballast, oder wobei der Ballast aus Stahlteilen, Betonteilen oder anderen Mitteln mit ausreichendem Gewicht besteht.

2. Flügeltransportwagen (1) nach Anspruch 1, **dadurch gekennzeichnet, dass** der Flügeltransportwagen (1) ferner ein Lenkungsteil (11) umfasst, wobei das Lenkungsteil (11) die Radachsen (14) mit Rädern (13) umfasst, und dass zwischen dem Fahrgestell (2) und dem Lenkungsteil (11) mindestens eine passive Lenkstange (16) angeordnet ist.

3. Flügeltransportwagen (1) nach Anspruch 1, **dadurch gekennzeichnet, dass** der Flügeltransportwagen (1) ferner ein Lenkungsteil (11) umfasst, wobei das Lenkungsteil (11) die Radachsen (14) mit Rädern (13) umfasst, und dass zwischen dem Fahrgestell (2) und dem Lenkungsteil (11) mindestens eine aktive Lenkstange (16) angeordnet ist.

4. Flügeltransportwagen (1) nach jedem der Ansprüche 2 und 3, **dadurch gekennzeichnet, dass** das hintere Ende des Flügeltransportwagens (4) aus einem Lenkungsteil (11) besteht.

5. Flügeltransportwagen (1) nach jedem der Ansprüche 1 bis 4, **dadurch gekennzeichnet, dass** das nach hinten gerichtete Kopplungsmittel (7) in vertikaler Richtung zwischen einer unteren Position und einer oberen Position verschiebbar ist, wobei der Unterschied zwischen der unteren und der oberen Position zwischen 5 cm und 100 cm, vorzugsweise etwa 50 cm beträgt.

6. Flügeltransportwagen (1) nach jedem der Ansprüche 1 bis 5, **dadurch gekennzeichnet, dass** das nach hinten gerichtete Kopplungsmittel (7) einen Hubmast (10), einschließlich einem oder mehrerer Linearantriebe, einschließlich einem oder mehrerer Hydraulikzylinder, umfasst.

7. Flügeltransportwagen (1) nach jedem der Ansprüche 1 bis 6, **dadurch gekennzeichnet, dass** das nach hinten gerichtete Kopplungsmittel (7) zwei parallele Hubgabeln (8) umfasst, wobei die beiden Hubgabeln (8) mit gegenseitigem Abstand und mit einer Länge, die einem Kopplungsteil (19) auf einem Gegenstand (18, 21) des Typs, für den der Flügeltransportwagen (1) zum Schleppen geeignet ist, angeordnet sind und wobei mindestens eine der Hubgabeln (8) Sicherungsmittel (9) zur Sicherung des Eingriffs mit einem entsprechenden Kopplungsteil (19) aufweist.

8. Flügeltransportwagen (1) nach jedem der Ansprüche 1 bis 7, **dadurch gekennzeichnet, dass** die nach hinten gerichteten Kopplungsmittel (7) relativ zu einer zentralen Längsachse, die sich von dem hinteren Ende (4) zum vorderen Ende (3) des Flügeltransportwagens erstreckt, seitlich verschoben sind.

9. Flügeltransportwagen (1) nach jedem der Ansprüche 1 bis 8, **dadurch gekennzeichnet, dass** die nach hinten gerichteten Kopplungsmittel (7) mechanisch in Querrichtung des Flügeltransportwagens verschoben sind.

10. Flügeltransportwagen (1) nach jedem der Ansprüche 1 bis 9, **dadurch gekennzeichnet, dass** der Flügeltransportwagen (1) mindestens zwei Wägezellen umfasst, die zwischen den nach hinten gerichteten Kopplungsmitteln (7) und dem Flügeltransportwagen (1) angeordnet sind oder in Verbindung mit den Radachsen (14) des Flügeltransportwagens zum Ermitteln der auf jede der Achsen (14) des Flügeltransportwagens aufgebrachten Last angeordnet sind.

11. Flügeltransportwagen (1) nach jedem der Ansprüche 1 bis 10, **dadurch gekennzeichnet, dass** am vorderen Ende (3) des Fahrzeuggestells (2) des Flügeltransportwagens ein Königszapfen (20) zum Koppeln an einen genormten Sattelaufliegerschemel auf einem Fahrzeug angeordnet ist.

## Revendications

1. Véhicule de transport d'une pale (1) destiné pour le remorquage d'une pale (21) pour une usine d'énergie éolienne, le véhicule de transport d'une pale (1) comprenant au moins un chassis (2) avec une partie avant (3) et une partie arrière (4), un dispositif de couplage (20) est prévu pour coupler, à la partie avant ou à proximité immédiate de la partie avant (3), le véhicule de transport d'une pale à un véhicule tracteur, le véhicule de transport d'une pale (1) comprenant encore une partie arrière (4) pour coupler à la pale (21) destinée à être remorquée, et un nombre d'essieux (14) avec des roues (13) disposées à la partie avant (3), à la partie arrière (4), ou entre les parties respectivement, le véhicule de transport d'une pale (1) à sa partie arrière (4) comprenant au moins un moyen de couplage (7) dirigé vers l'arrière et réalisé avec des moyens de sécurité (9) pour coupler de façon verrouillable à une partie de couplage correspondante (19) sur un palonnier (18) ou une pale (21) du type adapté pour être remorqué par le véhicule de transport d'une pale (19), **caractérisé en ce que** le véhicule de transport d'une pale (1) comporte un contrepoids (5) à la partie avant (3) du chassis (2) du véhicule de transport d'une pale, ledit contrepoids (5) comprend un conteneur remplis de lest, par exemple le béton ou un autre lest approprié ou dans le cas où ledit lest constitue des éléments en acier, en béton ou autre moyens avec un poids suffisant.

2. Véhicule de transport d'une pale (1) selon la revendication 1, **caractérisé en ce que** le véhicule de transport d'une pale (1) comprend encore une partie de guidage (11), la partie de guidage (11) comprend les essieux (14) avec des roues (13), et que, entre le chassis (2) et la partie de guidage (11), est disposée au moins une barre de direction passive (16).

3. Véhicule de transport d'une pale (1) selon la revendication 1, **caractérisé en ce que** le véhicule de transport d'une pale (1) comprend encore une partie de guidage (11), la partie de guidage (11) comprend les essieux (14) avec des roues (13), et que, entre le chassis (2) et la partie de guidage (11), est disposée au moins une barre de direction active (16).

4. Véhicule de transport d'une pale (1) selon l'une quelconque des revendications 2 et 3, **caractérisé en ce que** la partie arrière du véhicule de transport d'une pale (4) est constituée par une partie de guidage (11).

5. Véhicule de transport d'une pale (1) selon l'une quelconque des revendications 1 à 4, **caractérisé en ce que** les moyens de couplage (7) dirigés vers l'arrière sont déplaçables dans la direction verticale entre une position inférieure et une position supérieure, la différence entre la position inférieure et la position supérieure est de 5 cm à 100 cm, de préférence environ 50 cm.

6. Véhicule de transport d'une pale (1) selon l'une quelconque des revendications 1 à 5, **caractérisé en ce que** les moyens de couplage (7) dirigés vers l'arrière comprennent (10) une tour de levage (10) ayant un ou plusieurs actionneurs linéaires, y compris un ou plusieurs vérins hydrauliques.

7. Véhicule de transport d'une pale (1) selon l'une quelconque des revendications 1 à 6, **caractérisé en ce que** les moyens de couplage (7) dirigés vers l'arrière comprennent deux fourches de levage parallèles (8), les deux fourches de levage (8) sont disposées à une distance mutuelle et avec une longueur qui correspondent à une partie de couplage (19) se trouvant sur un objet (18, 21) du type qui est adapté à être remorqué par le véhicule de transport d'une pale (1), et au moins une des fourches de levage (8) comprend des moyens de sécurité (9) pour assurer l'accouplement avec une partie de couplage (19) correspondante.

8. Véhicule de transport d'une pale (1) selon l'une quelconque des revendications 1 à 7, **caractérisé en ce que** les moyens de couplage (7) dirigés vers l'arrière sont déplacés latéralement par rapport à un axe longitudinal central s'étendant à partir de la partie arrière (4) vers la partie avant (3) du véhicule de transport d'une pale.

9. Véhicule de transport d'une pale (1) selon l'une quelconque des revendications 1 à 8, **caractérisé en ce que** les moyens de couplage (7) dirigés vers l'arrière sont déplaçables mécaniquement dans la direction transversale du véhicule de transport d'une pale.

10. Véhicule de transport d'une pale (1) selon l'une quelconque des revendications 1 à 9, **caractérisé en ce que** le véhicule de transport d'une pale (1) comprend au moins deux cellules de pesage disposées entre les moyens de couplage (7) dirigés vers l'arrière et le véhicule de transport d'une pale (1), ou elles sont disposées en liaison avec les essieux (14) du véhicule de transport d'une pale, pour déterminer la charge appliquée à chacun des essieux (14) du véhicule de transport d'une pale.

11. Véhicule de transport d'une pale (1) selon l'une quelconque des revendications 1 à 10, **caractérisé en ce qu'**un pivot d'attelage (20) est aménagé à la partie avant (3) du chassis (2) du véhicule de transport d'une pale pour coupler une sellette d'attelage standardisée d'un véhicule.
